# EUROPÄISCHE PATENTSCHRIFT

(11) **EP 3 142 520 B1**
(45) Veröffentlichungstag und Bekanntmachung des Hinweises auf die Patenterteilung: **11.04.2018**
(21) Anmeldenummer: 15725522.5
(22) Anmeldetag: 11.05.2015
(51) Int. Cl.: A47F 5/11, A47B 47/04, A47B 47/06

(54) **BAUSATZ UND EINRICHTUNGSGEGENSTAND UND VERFAHREN ZU DESSEN HERSTELLUNG**
CONSTRUCTION KIT AND INSTALLATION ASSEMBLY AND METHOD FOR THE PRODUCTION THEREOF
KIT DE CONSTRUCTION AINSI QU'OBJET D'ÉQUIPEMENT ET SON PROCÉDÉ DE FABRICATION

(30) Priorität: 12.05.2014 DE 102014106608
(43) Veröffentlichungstag der Anmeldung: 22.03.2017
(73) Patentinhaber: ROOM IN A BOX GmbH & Co. KG, 10365 Berlin (DE)
(72) Erfinder: DISSEN, Gerald, 10559 Berlin (DE); PALM, Lionel, 12047 Berlin (DE); HILSE, Christian, 10240 Berlin (DE)
(74) Vertreter: Müller & Schubert
(86) Internationale Anmeldenummer: PCT/EP2015/060322
(87) Internationale Veröffentlichungsnummer: WO 2015/173174

(56) Entgegenhaltungen:
- DE-U1- 9 409 883
- DE-U1-202005 009 709
- JP-A- 2009 005 801
- US-A- 2 974 817

## Beschreibung

Die vorliegende Erfindung betrifft einen Bausatz für eine zusammenfaltbare, gleichmäßige Gefachstruktur. Weiterhin betrifft die Erfindung einen Einrichtungsgegenstand, welcher mittels des erfindungsgemäßen Bausatzes hergestellt wird und ein Verfahren zu dessen Herstellung.

Zusammenfaltbare Gefache sind im Stand der Technik bekannt. Derartige Gefache kommen in verschiedenen Bereichen als Transport- und Verpackungshelfer, Verkaufsaufsteller oder Möbel zum Einsatz.

Allgemein im Stand der Technik bekannte Versand- und Displayverpackungen mit Gefachstruktur, werden zum Beispiel in der DE 29511571 U1 beschrieben. Als Materialien werden faltbare Werkstoffe, wie Pappe oder Wellpappe beschrieben. Die Verpackung besteht aus einem Tray und einem sich darin befindlichen Gefach, das kreuzweise angeordnete Gefachwände aufweist.

Die DE 10 2004 040603 A1 offenbart die Verwendung von Hohlprofilen aus Pappe, Karton oder Hartpapier zur Herstellung von Möbeln. Die Hohlprofile werden unter Verwendung von Verbindungshilfsmitteln wie Keilen der konischen Bolzen an einander befestigt. Nachteilig an der Verwendung von Hohlprofilen ist, dass diese nicht zusammenfaltbar und demnach nicht platzsparend aufbewahrt werden können. Außerdem müssen Verbindungsstücke verwendet werden, um die Stabilität der Möbel zu gewährleisten.

Des Weiteren werden in der DE 20 2011 052 168 U1 Möbel, insbesondere Regale beschrieben, die aus ineinander steckbaren Platten bestehen. Die Platten bestehen aus Papier- oder Kunststoffwerkstoffen und sind zur Verbesserung der Stabilität miteinander verklebt. Diese Möbel sind im montierten Zustand nicht mehr zusammenfaltbar.

Weiterhin ist im Stand der Technik ein Kartonbett bekannt (Antoinette Bader, http://www.antoinettebader.net/pro_betten.html), das eine Gefachstruktur besitzt. Dieses Kartonbett des Standes der Technik unterscheidet sich von dem Gegenstand der vorliegenden Erfindung insbesondere darin, dass kein Bausatz verwendet wird, mit dem eine Gefachstruktur beliebiger Länge und Bereite erzeugt werden kann. Zusammengesetzt wird dieses Kartonbett aus einer Mehrzahl von Gefachbahnen. Die Gefachbahnen werden nebeneinander gestellt, um die Fläche eines Bettes zu bilden. Ein Nachteil dieses Kartonbetts ist die Gefahr des Verrutschens der die Liegefläche bildenden Gefachbahnen.
Auch ist das Gefach dieses Kartonbetts des Standes der Technik nicht homogen ausgebildet. Die Gefachstruktur setzt sich aus großen und kleinen Rauten zusammen. Aus diesem Grund weist das Kartonbett unterschiedlich stabile Bereiche auf, denn die Stabilität der Gefachstruktur wird durch die senkrechten Abschnitte, welche die Rautenstruktur aufspannen, wesentlich beeinflusst.
Weiterhin weisen die Gefachbahnen dieses Kartonbetts des Standes der Technik offene, laschenartige Bereiche auf, die senkrecht zur Ebene der Gefach-Bahnen in den Raum hineinragen. Dies ist nicht nur ästhetisch nachteilig. Bei der Benutzung können diese laschenartigen Bereiche nicht nur abknicken, sondern bergen auch eine Stolpergefahr, wenn Personen daran hängenbleiben. Weitere Bausätze sind aus den Dokumenten DE 20 2005 009709 U, US 2 974 817, DE 94 09 883 U und JP 2009 005801 bekannt. Aufgabe der vorliegenden Erfindung ist es daher, die Nachteile des Standes der Technik zu überwinden.
Die Aufgabe der Erfindung ist es, einen Bausatz bereitzustellen, mittels welchem eine faltbare Gefachstruktur erzeugt werden kann, welche eine hohe Symmetrie, Homogenität und Stabilität aufweist und in Abmessungen bereitgestellt werden kann, die beispielsweise für Liegeflächen bei Betten üblich sind.
Auch ist es Aufgabe der vorliegenden Erfindung, einen Bausatz bereitzustellen, der möglichst wenige Bauteiltypen umfasst. Dies wirkt sich positiv auf die Herstellungskosten aus.
Darüber hinaus ist es die Aufgabe der vorliegenden Erfindung ein Verfahren bereitzustellen, mittels welchem ein Einrichtungsgegenstand aus dem erfindungsgemäßen Bausatz aufgebaut werden kann.
Weiterhin ist es die Aufgabe der Erfindung Einrichtungsgegenstände bereitzustellen, welche die Nachteile des Standes überwinden.
Die Aufgabe der vorliegenden Erfindung wird gelöst durch die Bereitstellung eines Bausatzes, der Bauteile von mindestens zwei Typen A und B umfasst, und welcher zum Aufbau von Einrichtungsgegenständen verwendet werden kann.
Weiterhin wird die Aufgabe der Erfindung durch die Bereitstellung eines Verfahrens gelöst, mittels welchem aus dem erfindungsgemäßen Bausatz Einrichtungsgegenstände hergestellt werden können.
Darüber hinaus wird die Aufgabe der Erfindung durch die Bereitstellung von Einrichtungsgegenständen gelöst, welche mittels des erfindungsgemäßen Bausatzes errichtet werden können.
Die Aufgabe der vorliegenden Erfindung wird gelöst durch die Bereitstellung eines Bausatzes für eine zusammenfaltbare Gefachstruktur, wobei dieser Bausatz flächige Bauteile eines Typs A und Bauteile mindestens eines Typs B umfasst, die jeweils in Form von Rechtecken ausgebildet sind, die jeweils zwei Längsseiten und zwei Randseiten besitzen, wobei die Bauteile des Typs A und des Typs B jeweils eine Dicke D und jeweils eine identische Länge L und eine identische Breite W besitzen, die Bauteile des Typs A und des Typs B jeweils in n gleichgroße Abschnitte der Länge L/n unterteilt sind, die durch n+1 Abschnittsgrenzen begrenzt sind, wobei die Randseiten der Bauteile des Typs A und B die jeweiligen äußeren Abschnittsgrenzen ausbilden und die Mittelsenkrechte zwischen den Längsseiten der jeweiligen Bauteile die mittlere Abschnittsgrenze bildet, wobei die Mittelsenkrechte eine Symmetrieachse ist, und dadurch gekennzeichnet, dass in den Bauteilen des Typs A an einer Längsseite des jeweiligen Bauteils n-2 Schlitze entlang einer Teillänge der jeweiligen Abschnittsgrenzen angeordnet sind, die sich zwischen den Randseiten und der Symmetrieachse S befinden, und wobei in den Bauteilen des Typs B n-4 Schlitze entlang ausgewählter Abschnittsgrenzen angeordnet sind, die sich zwischen den Randseiten und der Symmetrieachse S befinden, wobei ein Teil der n-4 Schlitze ausgehend von einer Längsseite entlang einer Teillänge der jeweiligen Abschnittsgrenzen angeordnet ist, und der andere Teil der n-4 Schlitze ausgehend von der anderen Längsseite an den jeweiligen anderen Abschnittsgrenzen angeordnet ist, und wobei mindestens 2 der n-4 Schlitze der Bauteile des Typs B ausgehend von einer Längsseite jeweils entlang der Abschnittsgrenzen angeordnet sind, die zur Symmetrieachse direkt benachbart sind, und weiterhin mindestens 2 der n-4 Schlitze des Bauteils des Typs B ausgehend von der anderen Längsseite des Bauteils entlang der Abschnittsgrenzen angeordnet sind, die den jeweiligen Randseiten benachbart sind, und n 8, 10 oder 12 ist.

Besonders bevorzugt ist ein Bausatz, bei welchem n 8 ist und die Bauteile des Typs A und B in 8 gleichgroße Abschnitte unterteilt sind, die von 9 Abschnittsgrenzen begrenzt sind, wobei in den Bauteilen des Typs A 6 Schlitze angeordnet sind, die entlang einer Teillänge der jeweiligen Abschnittsgrenzen angeordnet sind, die sich zwischen den Randseiten und der Symmetrieachse S befinden, und wobei in den Bauteilen des Typs B 4 Schlitze angeordnet sind, die entlang einer Teillänge der jeweiligen Abschnittsgrenzen angeordnet sind, von denen 2 Schlitze ausgehend von einer Längsseite jeweils entlang der Abschnittsgrenzen angeordnet sind, die zur Symmetrieachse direkt benachbart sind, und wobei 2 Schlitze ausgehend von der anderen Längsseite des Bauteils entlang der Abschnittsgrenzen angeordnet sind, die den jeweiligen Randseiten benachbart sind.

Insbesondere bevorzugt ist ein Bausatz, bei welchem n 10 ist, und bei welchem die Bauteile des Typs A und B in 10 gleichgroße Abschnitte unterteilt sind, die von 11 Abschnittsgrenzen begrenzt sind, wobei in den Bauteilen des Typs A 8 Schlitze angeordnet sind, die entlang einer Teillänge der jeweiligen Abschnittsgrenzen angeordnet sind, die sich zwischen den Randseiten und der Symmetrieachse befinden, und wobei in den Bauteilen des Typs B 6 Schlitze angeordnet sind, die entlang einer Teillänge der jeweiligen Abschnittsgrenzen angeordnet sind, von denen 2 Schlitze ausgehend von einer Längsseite jeweils entlang der Abschnittsgrenzen angeordnet sind, die zur Symmetrieachse direkt benachbart sind, und wobei 2 Schlitze ausgehend von der anderen Längsseite des Bauteils entlang der Abschnittsgrenzen angeordnet sind, die den jeweiligen Randseiten benachbart sind, und 2 weitere Schlitze an den jeweiligen Abschnittsgrenzen dieser Längsseite angeordnet sind, und diesen zur jeweiligen Randseite benachbarten Schlitzen direkt benachbart sind.

Weiterhin bevorzugt ist ein Bausatz, bei welchem n 12 ist, und bei welchem die Bauteile des Typs A und B in 12 gleichgroße Abschnitte unterteilt sind, die von 13 Abschnittsgrenzen begrenzt sind, wobei in den Bauteilen des Typs A 10 Schlitze angeordnet sind, die entlang einer Teillänge der jeweiligen Abschnittsgrenzen angeordnet sind, die sich zwischen den Randseiten und der Symmetrieachse befinden, und wobei der Bausatz weiterhin Bauteile zweier unterschiedlicher Typen B, nämlich B1 und B2 umfasst, die jeweils 8 Schlitze aufweisen, die entlang einer Teillänge der jeweiligen Abschnittsgrenzen angeordnet sind, wobei im Bauteil des Typs B1 2 Schlitze ausgehend von einer Längsseite jeweils entlang einer Teillänge der jeweiligen Abschnittsgrenzen angeordnet sind, die zur Symmetrieachse direkt benachbart sind, und 6 Schlitze ausgehend von der anderen Längsseite des Bauteils entlang einer Teillänge der jeweils drei benachbarten Abschnittsgrenzen angeordnet sind, die sich zwischen den jeweiligen Randbereichen und der Symmetrieachse befinden, und wobei im Bauteil des Typs B2 6 Schlitze ausgehend von einer Längsseite jeweils entlang einer Teillänge der jeweiligen Abschnittsgrenzen angeordnet sind, die sich zwischen Symmetrieachse und den jeweiligen Randseiten befinden, und 2 Schlitze ausgehend von der anderen Längsseite des Bauteils entlang einer Teillänge der jeweiligen Abschnittsgrenzen angeordnet sind, die den jeweiligen Randseiten direkt benachbart sind.

Besonders vorteilhaft ist eine Ausführungsform des Bausatzes, bei welchem die Schlitze der Bauteile des Typs A jeweils eine identische Länge L_{A} besitzen, und die Schlitze der Bauteile des Typs B jeweils eine identische Länge L_{B} besitzen, und die Summe der Längen L_{A} und L_{B} größer oder gleich der Breite der Bauteile ist.

Besonders vorteilhaften ist eine Ausführungsform des Bausatzes, bei welcher die Schlitze der Bauteile eine Breite besitzen, wobei die Breite größer oder gleich der Dicke D der Bauteile ist, wobei bei Verwendung von Bauteilen unterschiedlicher Dicke D, die Breite W_{S} größer oder gleich der Dicke der Bauteile mit der größten Dicke D ist.

Weiterhin vorteilhaft ist ein Bausatz, bei welchem die Bauteile des Typs A und die Bauteile des Typs B mindestens eine Falzung aufweisen, die entlang einer Abschnittsgrenze angeordnet ist.

Erfindungsgemäß bevorzugt ist ein Bausatz, bei welchem die Bauteile aus Pappe, Wellpappe, Karton, Holz, Kunststoff, Metall, textilem Gewebe oder aus Verbundwerkstoffen der genannten Materialien hergestellt sind.

Vorteilhaft ist ein Bausatz, bei welchem die Bauteile eine Schutzschicht aufweisen, ausgewählt aus wasserabweisenden und/oder feuerhemmenden Materialien und/oder eine dekorative Schicht aufweisen, ausgewählt aus Farben, Folien, Lacken, Textilien und/oder Beflockungen.

Auch vorteilhaft ist ein Bausatz, bei welchem in den Bauteilen Öffnungen vorgesehen sind, in welche Stangen, Rohre, Drähte, Bänder oder Schnüre einführbar sind.

Weiterhin wird die Aufgabe der Erfindung gelöst durch die Bereitstellung eines Verfahrens zur Herstellung eines Einrichtungsgegenstandes unter Verwendung eines erfindungsgemäßen Bausatzes, bei welchem man eine Gefachstruktur aufbaut, indem man eine Vielzahl von Bauteilen des Typs A miteinander durch das Ineinanderführen der jeweiligen Schlitze miteinander verbindet, und bei Verwendung eines Bausatzes, bei dem n 8 oder 10 ist, die beiden offenen Randbereiche jeweils mittels eines Bauteils des Typs B abschließt, oder bei Verwendung eines Bausatzes, bei dem n 12 ist, die beiden offenen Randbereiche jeweils mit einem Bauteil des Typs B1 und des Typs B2 abschließt.

Darüber hinaus wird die Aufgabe der Erfindung durch die Bereitstellung eines Einrichtungsgegenstands gelöst, der mit einem erfindungsgemäßen Bausatz hergestellt ist, und in Form eines Bettes, eines Hockers, eines Podests oder einer Sitzfläche vorliegt.

Die flächigen Bauteile des Typs A und der Typen B, B1 und B2 des erfindungsgemäßen Bausatzes sind rechteckig ausgebildet. Jedoch können erfindungsgemäß auch Bauteile mit einer annähernd rechteckigen Grundstruktur verwendet werden. Unter dem Begriff "annähernd rechteckig" ist im Zusammenhang der vorliegenden Erfindung ein Grundkörper zu verstehen, der geringfügige Abweichung von der rechteckigen Grundstruktur aufweist. Als geringfügige Abweichung sind in diesem Zusammenhang beispielsweise gerundete Ecken zu verstehen.

Die Bauteile besitzen jeweils eine Länge L und eine Breite W, welche die rechteckige Grundform definiert. Weiterhin besitzen die Bauteile eine Dicke D. Aufgrund der im Verhältnis zu Länge L und Breite W sehr geringen Dicke D der Bauteile wird ihre Struktur auch als flächig bezeichnet. Diese Kennzeichnung soll jedoch nicht im Gegensatz dazu stehen, dass die Bauteile aufgrund ihrer Ausdehnungen L, W, D zwangsläufig dreidimensional und quaderförmig gestaltet sind.

Weiterhin werden die Bauteile unter Bezugnahme auf Abschnitte und Abschnittsgrenzen beschrieben. Die Bauteile A, B, B1 und B2 des erfindungsgemäßen Bausatzes sind aus n gleichgroßen Abschnitten aufgebaut. Mittels dieser Bezugnahmen wird die Anordnung der Schlitze in den Bauteilen erläutert. Durch eine Änderung der Breite des äußersten Abschnitts an einer oder beiden Randseiten der jeweiligen Bauteile, ohne dass die weitere Anordnung der Abschnittsgrenzen, ausgehend von der Symmetrieachse verändert wird, wird der Geltungsbereich der vorliegenden Erfindung nicht verlassen. Somit sind auch solche Bausätze erfindungsgemäß, bei welchen an den Bauteilen einseitig oder beidseitig das Bauteil über die Randseiten verlängert wird, so dass der äußerste Abschnitt vergrößert wird. Analog führt eine Verkürzung von den an die Randseiten grenzenden Abschnitten nicht zum Verlassen des Geltungsbereichs der Erfindung, so lange diese Verkürzung nicht zum Verlust des gesamten äußeren Abschnitts führt.

Die Bauteile des erfindungsgemäßen Bausatzes können neben den erfindungswesentlichen Schlitzen zusätzlich Durchbrechungen enthalten. Diese Durchbrechungen können in allen Bauteilen des erfindungsgemäßen Bausatzes vorliegen, oder nur in einigen Bauteilen vorgesehen sein. Mittels dieser Durchbrechungen, die beispielsweise als eine Vielzahl kleiner Öffnungen (Perforationen) oder als eine geringere Anzahl größerer Öffnungen ausgestaltet sind, wird das Gewicht der Bauteile reduziert. Um jedoch die erforderliche Stabilität eines aus dem erfindungsgemäßen Bausatz hergestellten Einrichtungsgegenstandes zu gewährleisten, ist die Anzahl der Durchbrüche, je nach geplantem Verwendungszweck des Gegenstandes, begrenzt.

Die vorliegende Erfindung wird mit den beigefügten Zeichnungen näher erläutert. Es zeigt:
Fig. 1 eine Draufsicht auf eine Untereinheit des Mittelteils der Gefachstruktur, welche aus zwei Bauteilen des Typs A besteht, wobei n 10 ist;
Fig. 2 eine schematische Draufsicht auf die mittels einer Ausführungsform des erfindungsgemäßen Bausatzes gebildete Gefachstruktur 1;
Fig. 3 eine Draufsicht auf ein Endstück, das aus einem Bauteil des Typs B und zwei Bauteilen des Typs A gebildet wird, wobei n 10 ist;
Fig. 4 eine schematische Darstellung eines Bauteils Typ A, bei dem n 8 ist;
Fig. 5 eine schematische Darstellung eines Bauteils Typ B, bei dem n 8 ist;
Fig. 6 eine schematische Darstellung eines Bauteils Typ A, bei dem die Anzahl der Abschnitte in den Bauteilen n 10 ist;
Fig. 7 eine schematische Darstellung eines Bauteils Typ B, bei dem die Anzahl der Abschnitte in den Bauteilen n 10 ist;
Fig. 8 eine schematische Darstellung eines Bauteils Typ A, bei dem die Anzahl der Abschnitte in den Bauteilen n 12 ist;
Fig. 9 eine schematische Darstellung eines Bauteils Typ B1, bei dem die Anzahl der Abschnitte in den Bauteilen n 12 ist;
Fig. 10 eine schematische Darstellung eines Bauteils Typ B2, bei dem die Anzahl der Abschnitte in den Bauteilen n 12 ist;
Fig. 11 ein Ausführungsbeispiel des erfindungsgemäßen Einrichtungsgegenstandes; als Bett dargestellt.

Die vorliegende Erfindung offenbart einen Bausatz für eine zusammenfaltbare Gefachstruktur. Dieser Bausatz kann verwendet werden, um Einrichtungsgegenstände herzustellen.

Überraschender Weise haben die Erfinder gefunden, dass unter Verwendung von maximal drei Typen von Bauteilen, homogene, symmetrische und stabile Gefachstrukturen erstellt werden können. Die Verwendung von maximal drei Typen von Bauteilen ist insbesondere vorteilhaft, weil mit einer geringen Anzahl unterschiedlicher Bauteile verhältnismäßig geringe Herstellungskosten verbunden sind.

Der erfindungsgemäße Bausatz umfasst bei zwei Ausführungsbeispielen der vorliegenden Erfindung lediglich Bauteile der beiden Typen A und B.
Bei einem weiteren erfindungsgemäßen Ausführungsbeispiel umfasst der Bausatz Bauteile des Typs A und Bauteile zweier unterschiedlicher Typen B, nämlich B1 und B2.

Alle Ausführungsbeispiele der Erfindung haben gegenüber dem Stand der Technik vorteilhafte Eigenschaften. Alle ermöglichen den Aufbau stabiler, zusammenfaltbarer Gefachstrukturen, die in einer gewünschten Länge, Breite und Höhe errichtet werden können. Hierbei ist insbesondere vorteilhaft, dass auch größere Einrichtungsgegenstände unter Verwendung des Bausatzes einteilig erstellt werden können. Eine Zusammensetzung aus mehreren Gefachbahnen ist hier nicht erforderlich.

Die Erfinder haben gefunden, dass ein Bausatz mit Bauteilen des Typs A mit n Abschnitten, wobei n 8, 10 oder 12 ist, und Typ A 6, 8 oder 10 Schlitze besitzt, und mit Bauteilen ausgewählt aus maximal zwei Typen B die Aufgabe der Erfindung löst.

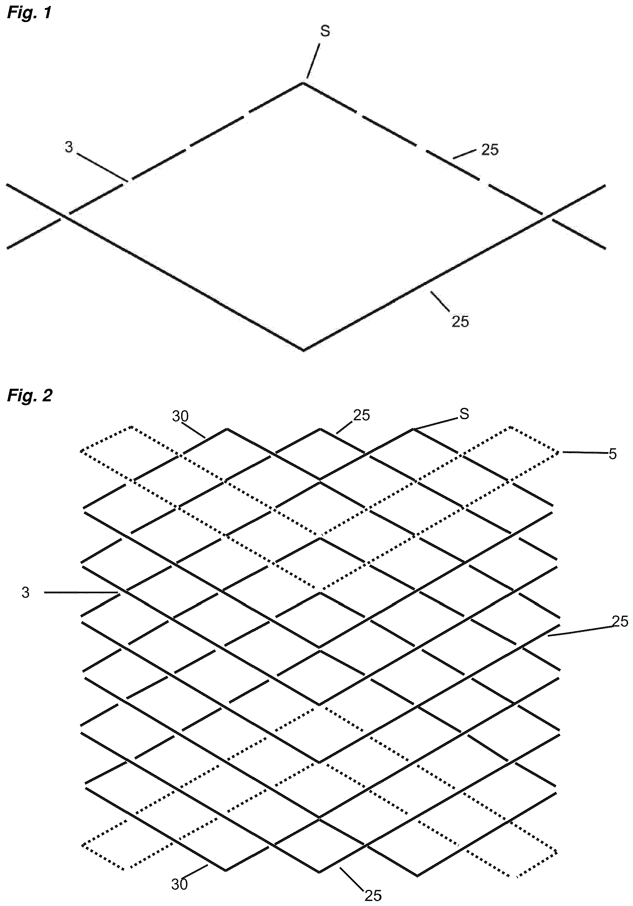

Die zusammenfaltbare Gefachstruktur, die mittels der Ausführungsbeispiele des erfindungsgemäßen Bausatzes errichtet wird, besteht aus einer symmetrischen Struktur, die aus Bauteilen des Typs A errichtet wird. Die Bauteile des Typs A werden wie in Fig. 1 gezeigt, miteinander verbunden.

Abgeschlossen werden die beiden Enden der Struktur durch die Verwendung von Bauteilen des Typs B. Wird ein Bausatz verwendet, bei dem ein Bauteil des Typs A mit 6 oder mit 8 Schlitzen verwendet wird, wird an den jeweiligen Enden der Struktur jeweils nur ein Bauteil des Typs B angebracht.
Wird ein Bausatz verwendet, bei dem ein Bauteil des Typs A mit 10 Schlitzen verwendet wird, werden an beiden Enden der Struktur jeweils ein Bauteil des Typs B1 und des Typs B2 mit einem Bauteil des Typs A verbunden, um den Abschluss zu bilden.

Besonders bevorzugt ist ein Ausführungsbeispiel der Erfindung, bei welchem der Bausatz Bauteile des Typs A mit 8 Schlitzen und weiterhin nur Bauteile des Typs B umfasst. Dieser Bausatz bietet bei Verwendung des Bausatzes zum Aufbau eines Einrichtungsgegenstandes einen weiteren Vorteil. Mittels dieses Bausatzes kann eine Gefachstruktur aufgebaut werden, welche auch an den äußeren Seitenbereichen insofern geschlossen ist, als keine laschenartigen Materialenden hervorstehen.

Das Hervorstehen laschenartiger Teile an einer Gefachstruktur ist ein Nachteil, der an dem bereits diskutierten Kartonbett des Standes der Technik auftritt. Diese laschenartigen Bereiche stehen senkrecht zur Ebene der GefachBahnen und ragen beim Kartonbett des Standes der Technik in den Raum hinein. Dies ist nicht nur ästhetisch nachteilig. Bei der Benutzung können diese laschenartigen Bereiche nicht nur abknicken, sondern bergen auch eine Stolpergefahr, wenn Personen daran hängenbleiben.

Der erfindungsgemäße Bausatz, der auch diesen Nachteil des Standes der Technik überwindet, umfasst insgesamt nur zwei Bauteile des Typs B. Alle weiteren Bauteile sind Bauteile des Typs A. Dies bedeutet, dass unabhängig von den Ausmaßen des zu errichtenden Gegenstandes die Anzahl der zu verwendenden Bauteile des Typs B immer zwei ist.

Wie aus einem erfindungsgemäßen Bausatz ein Einrichtungsgegenstand erstellt wird, wird ausführlich in Beispiel 4 beschrieben.

Die erfindungsgemäßen Einrichtungsgegenstände können nach ihrem Zusammenbau aus dem erfindungsgemäßen Bausatz platzsparend zusammengefaltet werden. Eine Demontage der Struktur ist zwar möglich, jedoch für eine raumsparende Unterbringung nicht erforderlich.

Bei der Benutzung kann die Stabilität erhöht und die Flexibilität der Struktur eingeschränkt werden, indem stabilisierende Mittel wie Stangen Rohre, Drähte, Bänder oder Schnüre durch Öffnungen in den Seitenbereichen geführt werden. Mittels dieser stabilisierenden Mittel kann die Struktur in einem Zustand zwischen der minimalen und der maximalen Auffaltung zusätzlich fixiert werden.

Es ist jedoch möglich, die erfindungsgemäße Gefachstruktur zwischen der minimalen Auffaltung und der maximalen Auffaltung beispielsweise durch eine Auflage wie eine Matratze zu fixieren.

Die Länge und die Breite des mittels des erfindungsgemäßen Bausatzes aufgebauten Einrichtungsgegenstands ist bei einer vorgegebenen Länge L der Bauteile vom Grad der Auffaltung der Gefachstruktur abhängig. So können die Ausdehnungen der Gefachstruktur durch Vergrößerung oder Verkleinerung des Winkels, der in den Bauteilen des Typs A zwischen den zur Symmetrieachse benachbarten Abschnitten gebildet wird, verändert werden. Eine Auffaltung, welche zu einer Vergrößerung der Länge des Einrichtungsgegenstandes führt, bewirkt zugleich eine Verringerung der Breite.

Sollen die Bauteile dauerhaft in einer aufgefalteten Struktur fixiert werden, können die Verbindungsstellen der Bauteile zusätzlich mit Klebemitteln fixiert werden. Für die übliche Benutzung ist diese Fixierung jedoch nicht erforderlich. Sie empfiehlt sich nur, wenn der Einrichtungsgegenstand einer außergewöhnlichen Belastung ausgesetzt werden soll. Dies kann beispielsweise bei der Benutzung als Podest empfehlenswert sein, wo die Flexibilität der Struktur aus Sicherheitsgründen nahezu ausgeschlossen werden sollte.

Die Erfindung wird nachfolgend anhand bevorzugter Ausführungsbeispiele unter Bezugnahme auf die beigefügten Figuren weiter erläutert, ohne dass jedoch der Umfang der Erfindung durch die Ausführungsbeispiele beschränkt wird.

In den Figuren 1, 2 und 3 werden schematische Darstellungen von Teilstrukturen eines erfindungsgemäßen Ausführungsbeispiels der erfindungsgemäßen Gefachstruktur gezeigt. Zur Darstellung wurde das Ausführungsbeispiel gewählt, bei welchem ein Bausatz mit Bauteilen des Typs A, gekennzeichnet mit Bezugszeichen 25, mit 10 Abschnitten und 8 Schlitzen 3 zum Aufbau verwendet wurde. Die Bauteile des Typs B, gekennzeichnet mit Bezugszeichen 30, besitzenlO Abschnitte und 6 Schlitze. Der verwendete Bausatz entspricht dem Bausatz des Beispiels 2, das Verfahren zum Aufbau dieser Struktur wird in Beispiel 4 ausführlich erläutert.

Fig. 1 zeigt eine Draufsicht auf einen Teilausschnitt der Struktur, welche aus zwei Bauteilen des Typs A gebildet wird. Gezeigt wird eine Untereinheit des Mittelteils der Gefachstruktur.

In Fig. 2 ist eine schematische Draufsicht auf die vollständige Gefachstruktur 1 gezeigt. Als gestrichelte Linien sind die Eckstücke 5 der Struktur dargestellt.

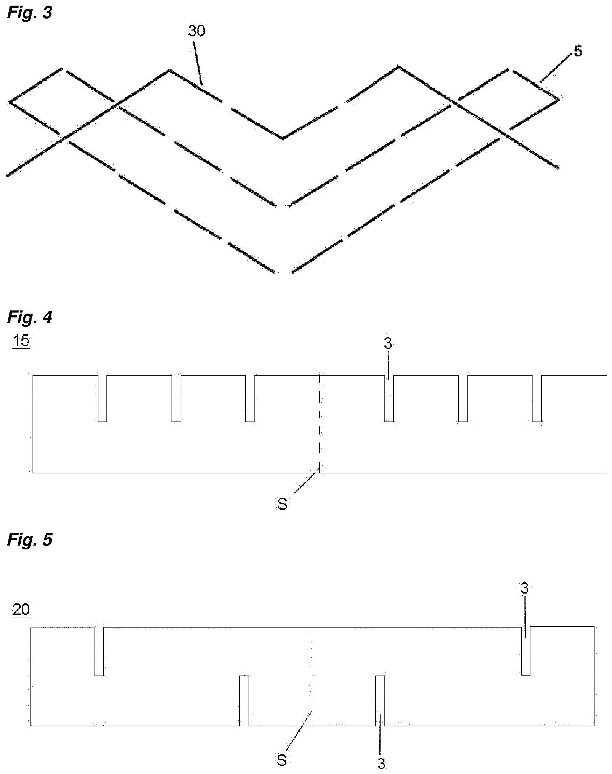

Fig. 3 wird ein Endstück einer erfindungsgemäßen Gefachstruktur dargestellt. Das gezeigte Endstück gehört zum Ausführungsbeispiel, bei welchem n 10 ist. Wie in dieser Ansicht gezeigt, ist das Bauteil des Typs A nicht nur entlang der Symmetrieachse S, sondern auch an einer benachbarten Abschnittsgrenze gefaltet. Grundsätzlich ist es möglich, die Bauteile des Typs A und der Typen B, B1 und B2 entlang jeder Abschnittsgrenze, auch entlang der Schlitze, zu biegen.
Mit Bezugszeichen 5 ist dieses auf spezielle Weise gefaltete Bauteil des Typs A gekennzeichnet.

Im Beispiel 4 wird unter Bezugnahme auf die Figuren 1 bis 3 ausführlich beschrieben, wie die Gefachstruktur dieses Ausführungsbeispiels erstellt wird.

In den Figuren 4 bis 10 sind die Bauteile des Typs A, gekennzeichnet mit Bezugszeichen 15, 25, 35, B, gekennzeichnet mit Bezugszeichen 20 und 30, B1, 40, und B2, mit 45 gekennzeichnet, der erfindungsgemäßen Ausführungsbeispiele gezeigt.

So zeigt Fig. 4 das Bauteil 15 des Typs A eines erfindungsgemäßen Bausatzes, bei welchem n 8 ist und das Bauteil des Typs A 6 Schlitze 3 besitzt. In Fig. 5 ist das Bauteil 20 des Typs B dieses Bausatzes gezeigt. Das Bauteil des Typs B besitzt 4 Schlitze 3. Dieser Bausatz ist auch in Beispiel 1 beschrieben.

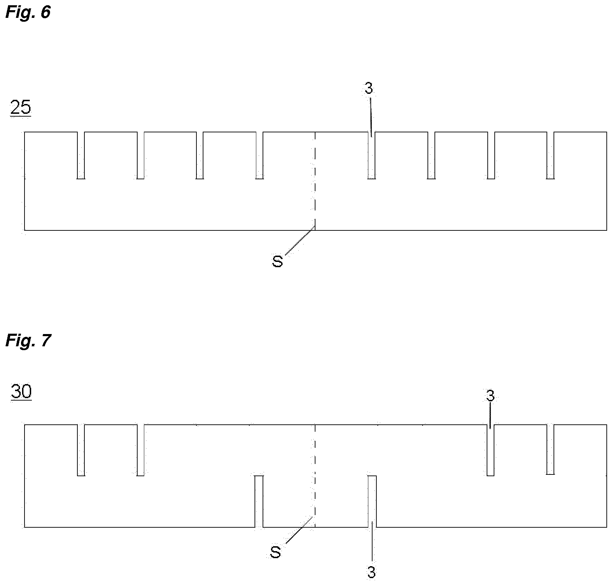

In den Figuren 6 und 7 sind die Bauteile des erfindungsgemäßen Bausatzes gezeigt, bei welchem n 10 ist. Das Bauteil 25 des Typs A, das in Fig. 6 gezeigt ist, besitzt 8 Schlitze 3, das Bauteil 30 des Typs B besitzt 6 Schlitze 3, was in Fig. 7 dargestellt ist. Dieser Bausatz wird in Beispiel 2 beschrieben. Weiterhin wird in Beispiel 4 offenbart, wie aus diesem Bausatz eine erfindungsgemäße Gefachstruktur aufgebaut wird. Detaildarstellungen einer Struktur, die aus diesem Bausatz aufgebaut wurde, zeigen auch die Figuren 1 bis 3.

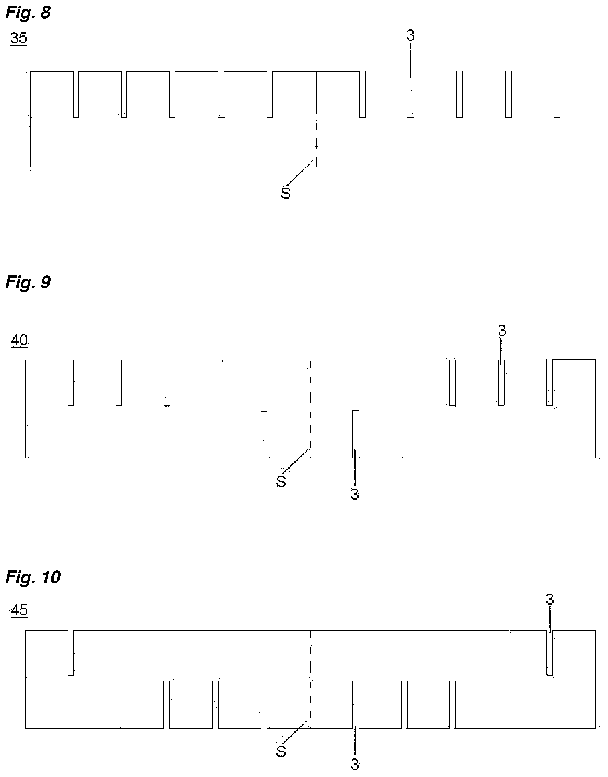

Die Bauteile 35 des Typs A, des Typs B1, mit 40 gekennzeichnet, und des Typs B2, mit 45 gekennzeichnet, eines erfindungsgemäßen Bausatzes, bei welchem n 12 ist, sind in den Figuren 8, 9 und 10 dargestellt. Hierbei zeigt Fig. 8 das Bauteil 35 des Typs A dieses Bausatzes, welches 10 Schlitze 3 besitzt. Das Bauteil des Typs B1, 40, zeigt Fig. 9 und das Bauteil des Typs B2, 45, ist in Fig. 10 gezeigt. Dieser Bausatz wird auch in Beispiel 3 beschrieben.

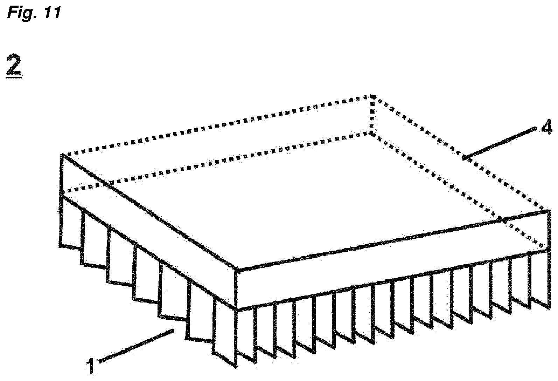

In Fig. 11 ist eine Ausführungsform des erfindungsgemäßen Einrichtungsgegenstandes 2 gezeigt. Dargestellt ist die Gefachstruktur 1, auf welcher eine Auflage 4 aufliegt. Diese Auflage wird beispielsweise eine Matratze sein, wenn der Einrichtungsgegenstand als Bett verwendet wird.

### Beispiel 1

### Bausatz 1

Erfindungsgemäß bevorzugt ist ein Bausatz, welcher Bauteile 15 des Typs A mit 6 Schlitzen 3 umfasst, und Bauteile 20 des Typs B umfasst, die 4 Schlitze 3 aufweisen. Zum Aufbau einer Gefachstruktur werden 2 Bauteile 20 des Typs B benötigt. Die Anzahl der Bauteile 15 des Typs A richtet sich nach den gewünschten Dimensionen des Gegenstandes.

### Beispiel 2

### Bausatz 2

In einer bevorzugten Ausführungsform der Erfindung umfasst der Bausatz Bauteile 25 des Typs A mit 8 Schlitzen 3 und Bauteile 30 des Typs B mit 6 Schlitzen 3.
Zum Aufbau einer Gefachstruktur werden 2 Bauteile 30 des Typs B benötigt. Die Anzahl der Bauteile 25 des Typs A richtet sich nach den gewünschten Dimensionen des Gegenstandes.

### Beispiel 3

### Bausatz 3

In einer bevorzugten Ausführungsform umfasst der Bausatz Bauteile 35 des Typs A mit 10 Schlitzen 3 und Bauteile zweier verschiedener Typen B, nämlich B1 (mit 40 gekennzeichnet) und B2 (mit 45 gekennzeichnet) mit jeweils 8 Schlitzen 3. Zum Aufbau einer Gefachstruktur werden jeweils 2 Bauteile, 40,45, des Typs B1 und B2 benötigt. Die Anzahl der Bauteile 35 des Typs A richtet sich nach den gewünschten Dimensionen des Gegenstandes.

### Beispiel 4

### Gefachstruktur aus Bausatz des Beispiels 2

Nachfolgend wird erläutert, wie aus einer Ausführungsform des erfindungsgemäßen Bausatzes eine erfindungsgemäße Gefachstruktur errichtet wird.

Der erfindungsgemäße Bausatz umfasst Bauteile 25 des Typs A, welche 8 Schlitze 3 aufweisen. Der Bausatz umfasst weiterhin Bauteile 30 des Typs B, welche 6 Schlitze 3 aufweisen.

Die Bauteile des Typs A und B dieses Bausatzes sind in 10 gleichgroße Abschnitte unterteilt, die von 11 Abschnittsgrenzen begrenzt sind. Die 8 Schlitze 3 der Bauteile 25 des Typs A sind entlang einer Teillänge der jeweiligen Abschnittsgrenzen angeordnet, die sich zwischen den Randseiten und der Symmetrieachse S befinden. In den Bauteilen 30 des Typs B sind 6 Schlitze 3 angeordnet, die entlang einer Teillänge der jeweiligen Abschnittsgrenzen angeordnet sind, von denen 2 Schlitze ausgehend von einer Längsseite jeweils entlang der Abschnittsgrenzen angeordnet sind, die zur Symmetrieachse S direkt benachbart sind. 2 Schlitze 3 sind ausgehend von der anderen Längsseite des Bauteils entlang der Abschnittsgrenzen angeordnet sind, die den jeweiligen Randseiten benachbart sind, und 2 weitere Schlitze 3 sind an den jeweiligen Abschnittsgrenzen dieser Längsseite angeordnet, und diesen zur jeweiligen Randseite benachbarten Schlitzen direkt benachbart.

Um die Homogenität und die daraus resultierende Stabilität im Vergleich zu verwendeten Gefachstrukturen des Standes der Technik zu verbessern, werden aus dem erfindungsgemäßen Bausatz dieses Ausführungsbeispiels zwei Endstücken und ein Mittelteil gebildet.

Im Zusammenhang der Erläuterung dieses Beispiels wird davon ausgegangen, dass die erfindungsgemäße Gefachstruktur auf einem Untergrund (Boden) aus dem erfindungsgemäßen Bausatz zusammengebaut wird. Der Teil der Gefachstruktur, der beim Zusammenbau mit dem Boden in Kontakt kommt, also auf diesen gerichtet ist, wird als "unten" bzw. "Unterseite" oder "unterer Teil" bezeichnet. Der vom Boden abgewandte Teil der Gefachstruktur wird als "oben" bzw. "Oberseite" oder "oberer Teil" bezeichnet.

Das Mittelteil der Gefachstruktur wird aus Untereinheiten (siehe Fig. 1) aufgebaut, die jeweils aus zwei zusammengefügten Bauteilen 25 des Typs A bestehen. Nachfolgend wird der Zusammenbau der Untereinheit offenbart und die Verbindung von Untereinheiten zum Aufbau einer erfindungsgemäßen Gefachstruktur. Eine erfindungsgemäße Gefachstruktur umfasst mindestens ein Mittelteil.

Zum Aufbau der Untereinheit werden zwei Bauteile 25 des Typs A wie in Fig. 1 schematisch gezeigt, zusammengeführt. Wie in Fig. 1 dargestellt, werden die Bauteile 25 des Typs A derart miteinander verbunden, dass ein Bauteil 25 des Typs A mit nach unten gerichteten Schlitzen 3 in das Bauteil 25 des Typs A verschränkt wird. Das zweite Bauteil 25 des Typs A ist mit nach oben gerichteten Schlitzen 3 angeordnet. Die Bauteile 25 werden auf diese Weise mittels der jeweils von der Symmetrieachse S am weitesten entfernten beiden Schlitze 3 der jeweiligen Bauteile 25 miteinander verbunden.
Aufgrund dieser Verknüpfung stehen in den beiden Bauteilen des Typs A der Untereinheit jeweils noch 6 Schlitze 3 für die potentielle weitere Verschränkung mit anderen Bauteilen zur Verfügung.

Besitzt die erfindungsgemäße Gefachstruktur mehr als eine Untereinheit, so werden die Untereinheiten miteinander durch das Ineinanderführen von Schlitzen verbunden. Hierbei wird eine Untereinheit von oben mit ihren Schlitzen in die Schlitze der anderen Untereinheit derart eingeführt, dass jeweils die in Bezug auf die Symmetrieachse S jeweils am weitesten entfernten freien Schlitze der Untereinheiten ineinander greifen.
Bei Bedarf können weitere Untereinheiten mit dieser Struktur verbunden werden, um einen längeren Mittelteil zu erzeugen.

Hat das Mittelteil der Gefachstruktur die gewünschte Länge, wird der Aufbau durch das Anfügen von Endstücken beendet.

Bei der in diesem Beispiel beschriebenen erfindungsgemäßen Ausführungsform bilden 2 Bauteile 25 des Typs A und ein Bauteil 30 des Typs B jeweils ein Endstück aus. Dieses Endstück ist in Figur 3 gezeigt.

Das Bauteil des Typs A ist in dieser Figur mit Bezugszeichen 5 gekennzeichnet, um auf die spezielle Faltung des Bauteils hinzuweisen. Anders als im Mittelteil der Gefachstruktur ist hierbei das Bauteil des Typs A entlang der Symmetrieachse und weiterhin entlang der dieser direkt benachbarten Abschnittsgrenze gefaltet. Dadurch wird ein Abschnitt abgeteilt, welcher die Stirnfläche einer nun gebildeten gewinkelten Form des Bauteils des Typs A bildet. Das Bauteil besitzt durch diese Faltung zwei Teilbereiche, die unterschiedlich lang sind und wird in Zusammenhang der Erfindung auch als Eckstück bezeichnet. Das Eckstück 5 wird von oben über die jeweiligen Schlitze 3 der in den zur Stirnfläche direkt benachbarten Abschnittsgrenzen befindlichen Schlitzen in die nach oben zeigenden Schlitze 3 des Bauteils 30 des Typs B gesteckt. Hierbei werden die beiden Eckstücke derart in Bauteil 30 eingeführt, dass jeweils der kürzere Teilbereich des jeweiligen Eckstücks der Symmetrieachse benachbart ist.

Jeweils ein Endstück wird nun von oben oder von unten mit dem Mitteilteil verbunden, indem die Schlitze des Endstücks in die Schlitze des Mittelstücks eingeführt werden. Beim Zusammenführen von Mittelteil und jeweils einem Endstück wird in alle im Mittelteil zur Verfügung stehenden offenen Schlitze der Oberseite bzw. Unterseite eingegriffen.

Mit der Bereitstellung des erfindungsgemäßen Bausatzes können faltbare Gefachstrukturen hergestellt werden, die sich insbesondere zur Errichtung von Einrichtungsgegenständen eignen. Die vorteilhaften Eigenschaften der erfindungsgemäßen Einrichtungsgegenstände, wie die geringe Anzahl verschiedener Bauteile, die zum Aufbau benötigt werden, die hohe Stabilität und Homogenität der Einrichtungsgegenstände und die große Flexibilität in der Wahl der Dimensionen des Gegenstandes, überwinden die Nachteile des Standes der Technik.

### Bezugszeichenliste

- 1: Gefachstruktur
- 2: Einrichtungsgegenstand (Bett)
- 3: Schlitz
- 4: Auflage
- 5: Eckstück, Bauteil 25 mit Faltung
- S: Symmetrieachse
- 15: Bauteil Typ A, n=8, 6 Schlitze
- 20: Bauteil Typ B, n=8, 4 Schlitze
- 25: Bauteil Typ A, n=10, 8 Schlitze
- 30: Bauteil Typ A, n=10, 8 Schlitze
- 35: Bauteil Typ A, n=12, 10 Schlitze
- 40: Bauteil Typ A, n=12, 8 Schlitze
- 45: Bauteil Typ A, n=12, 8 Schlitze

## Patentansprüche

1. Bausatz, für eine zusammenfaltbare Gefachstruktur (1),
**dadurch gekennzeichnet,**
**dass** der Bausatz flächige Bauteile eines Typs A (15, 25, 35) und Bauteile mindestens eines Typs B (20, 30, 40, 45) umfasst, die jeweils in Form von Rechtecken ausgebildet sind, die jeweils zwei Längsseiten und zwei Randseiten besitzen,
wobei die Bauteile des Typs A (15, 25, 35) und des Typs B (20, 30, 40, 45) jeweils eine Dicke (D) und jeweils eine identische Länge (L) und eine identische Breite (W) besitzen,
die Bauteile des Typs A (15, 25, 35) und des Typs B (20, 30, 40, 45) jeweils in n gleichgroße Abschnitte der Länge L/n unterteilt sind, die durch n+1 Abschnittsgrenzen begrenzt sind,
wobei die Randseiten der Bauteile des Typs A und B (20, 30, 40, 45) die jeweiligen äußeren Abschnittsgrenzen ausbilden und die Mittelsenkrechte zwischen den Längsseiten der jeweiligen Bauteile die mittlere Abschnittsgrenze bildet,
wobei die Mittelsenkrechte eine Symmetrieachse (S) ist,
und **dadurch gekennzeichnet, dass** in den Bauteilen des Typs A an einer Längsseite des jeweiligen Bauteils n-2 Schlitze entlang einer Teillänge der jeweiligen Abschnittsgrenzen angeordnet sind, die sich zwischen den Randseiten und der Symmetrieachse (S) befinden,
und wobei in den Bauteilen des Typs B (20, 30, 40, 45) n-4 Schlitze entlang ausgewählter Abschnittsgrenzen angeordnet sind, die sich zwischen den Randseiten und der Symmetrieachse (S) befinden,
wobei ein Teil der n-4 Schlitze ausgehend von einer Längsseite entlang einer Teillänge der jeweiligen Abschnittsgrenzen angeordnet ist, und der andere Teil der n-4 Schlitze ausgehend von der anderen Längsseite an den jeweiligen anderen Abschnittsgrenzen angeordnet ist,
und wobei mindestens 2 der n-4 Schlitze der Bauteile des Typs B (20, 30, 40, 45) ausgehend von einer Längsseite jeweils entlang der Abschnittsgrenzen angeordnet sind, die zur Symmetrieachse direkt benachbart sind,
und weiterhin mindestens 2 der n-4 Schlitze des Bauteils des Typs B (20, 30, 40, 45) ausgehend von der anderen Längsseite des Bauteils entlang der Abschnittsgrenzen angeordnet sind, die den jeweiligen Randseiten benachbart sind,
und n 8, 10 oder 12 ist.

2. Bausatz, gemäß Anspruch 1,
**dadurch gekennzeichnet, dass** n 8 ist,
die Bauteile des Typs A (15) und B (20) in 8 gleichgroße Abschnitte unterteilt sind, die von 9 Abschnittsgrenzen begrenzt sind,
wobei in den Bauteilen des Typs A (15) 6 Schlitze (3) angeordnet sind,
die entlang einer Teillänge der jeweiligen Abschnittsgrenzen angeordnet sind, die sich zwischen den Randseiten und der Symmetrieachse (S) befinden,
und wobei in den Bauteilen des Typs B (20) 4 Schlitze (3) angeordnet sind, die entlang einer Teillänge der jeweiligen Abschnittsgrenzen angeordnet sind,
von denen 2 Schlitze ausgehend von einer Längsseite jeweils entlang der Abschnittsgrenzen angeordnet sind, die zur Symmetrieachse direkt benachbart sind,
und wobei 2 Schlitze ausgehend von der anderen Längsseite des Bauteils entlang der Abschnittsgrenzen angeordnet sind, die den jeweiligen Randseiten benachbart sind.

3. Bausatz, gemäß Anspruch 1,
**dadurch gekennzeichnet, dass** n 10 ist,
die Bauteile des Typs A (25) und B (30) in 10 gleichgroße Abschnitte unterteilt sind, die von 11 Abschnittsgrenzen begrenzt sind,
wobei in den Bauteilen des Typs A 8 Schlitze (3) angeordnet sind, die entlang einer Teillänge der jeweiligen Abschnittsgrenzen angeordnet sind, die sich zwischen den Randseiten und der Symmetrieachse (S) befinden,
und wobei in den Bauteilen des Typs B (30) 6 Schlitze (3) angeordnet sind, die entlang einer Teillänge der jeweiligen Abschnittsgrenzen angeordnet sind,
von denen 2 Schlitze ausgehend von einer Längsseite jeweils entlang der Abschnittsgrenzen angeordnet sind, die zur Symmetrieachse direkt benachbart sind,
und wobei 2 Schlitze (3) ausgehend von der anderen Längsseite des Bauteils entlang der Abschnittsgrenzen angeordnet sind, die den jeweiligen Randseiten benachbart sind,
und 2 weitere Schlitze (3) an den jeweiligen Abschnittsgrenzen dieser Längsseite angeordnet sind, und diesen zur jeweiligen Randseite benachbarten Schlitzen direkt benachbart sind.

4. Bausatz, gemäß Anspruch 1,
**dadurch gekennzeichnet, dass** n 12 ist,
die Bauteile des Typs A (35) und B (40, 45) in 12 gleichgroße Abschnitte unterteilt sind, die von 13 Abschnittsgrenzen begrenzt sind,
wobei in den Bauteilen des Typs A 10 Schlitze (3) angeordnet sind, die entlang einer Teillänge der jeweiligen Abschnittsgrenzen angeordnet sind, die sich zwischen den Randseiten und der Symmetrieachse (S) befinden,
und wobei der Bausatz weiterhin Bauteile zweier unterschiedlicher Typen B, nämlich B1 (40) und B2 (45) umfasst, die jeweils 8 Schlitze (3) aufweisen, die entlang einer Teillänge der jeweiligen Abschnittsgrenzen angeordnet sind,
wobei im Bauteil des Typs B1 (40) 2 Schlitze (3) ausgehend von einer Längsseite jeweils entlang einer Teillänge der jeweiligen Abschnittsgrenzen angeordnet sind, die zur Symmetrieachse direkt benachbart sind,
und 6 Schlitze (3) ausgehend von der anderen Längsseite des Bauteils entlang einer Teillänge der jeweils drei benachbarten Abschnittsgrenzen angeordnet sind, die sich zwischen den jeweiligen Randbereichen und der Symmetrieachse (S) befinden,
und wobei im Bauteil des Typs B2 (45) 6 Schlitze (3) ausgehend von einer Längsseite jeweils entlang einer Teillänge der jeweiligen Abschnittsgrenzen angeordnet sind, die sich zwischen Symmetrieachse (S) und den jeweiligen Randseiten befinden,
und 2 Schlitze (3) ausgehend von der anderen Längsseite des Bauteils entlang einer Teillänge der jeweiligen Abschnittsgrenzen angeordnet sind, die den jeweiligen Randseiten direkt benachbart sind.

5. Bausatz, gemäß einem der vorangehenden Ansprüche, **dadurch gekennzeichnet, dass** die Schlitze (3) der Bauteile des Typs A (15, 25, 35) jeweils eine identische Länge (L_{A}) besitzen, und die Schlitze (3) der Bauteile des Typs B (20, 30, 40, 45) jeweils eine identische Länge (L_{B}) besitzen, und die Summe der Längen (L_{A}) und (L_{B}) größer oder gleich der Breite (W) der Bauteile ist.

6. Bausatz, gemäß einem der vorangehenden Ansprüche, **dadurch gekennzeichnet, dass** die Schlitze (3) der Bauteile eine Breite (W_{S}) besitzen, wobei die Breite (W_{S}) größer oder gleich der Dicke (D) der Bauteile ist, wobei bei Verwendung von Bauteilen unterschiedlicher Dicke (D), die Breite (W_{S}) größer oder gleich der Dicke der Bauteile mit der größten Dicke (D) ist.

7. Bausatz, gemäß einem der vorangehenden Ansprüche, **dadurch gekennzeichnet, dass** die Bauteile des Typs A (15, 25, 35) und die Bauteile des Typs B (20, 30, 40, 45) mindestens eine Falzung aufweisen, die entlang einer Abschnittsgrenze angeordnet ist.

8. Bausatz, gemäß einem der vorangehenden Ansprüche, **dadurch gekennzeichnet, dass** die Bauteile aus Pappe, Wellpappe, Karton, Holz, Kunststoff, Metall, textilem Gewebe oder aus Verbundwerkstoffen der genannten Materialien hergestellt sind.

9. Bausatz, gemäß einem der vorangehenden Ansprüche, **dadurch gekennzeichnet, dass** die Bauteile eine Schutzschicht aufweisen, ausgewählt aus wasserabweisenden und/oder feuerhemmenden Materialien und/oder eine dekorative Schicht aufweisen, ausgewählt aus Farben, Folien, Lacken, Textilien und/oder Beflockungen.

10. Bausatz, gemäß einem der vorangehenden Ansprüche, **dadurch gekennzeichnet, dass** in den Bauteilen Öffnungen vorgesehen sind, in welche Stangen, Rohre, Drähte, Bänder oder Schnüre einführbar sind.

11. Verfahren zur Herstellung eines Einrichtungsgegenstandes (2) unter Verwendung eines Bausatzes gemäß einem der Ansprüche 1 bis 10, **dadurch gekennzeichnet, dass** man eine Gefachstruktur aufbaut, indem man
eine Vielzahl von Bauteilen des Typs A (15, 25, 35) miteinander durch das Ineinanderführen der jeweiligen Schlitze miteinander verbindet, und bei Verwendung eines Bausatzes, bei dem n 8 oder 10 ist, die beiden offenen Randbereiche jeweils mittels eines Bauteils des Typs B (20, 30) abschließt, oder
bei Verwendung eines Bausatzes, bei dem n 12 ist, die beiden offenen Randbereiche jeweils mit einem Bauteil des Typs B1 (40) und des Typs B2 (45) abschließt.

12. Einrichtungsgegenstand (2), hergestellt mit einem Bausatz gemäß einem der Ansprüche 1 bis 10, in Form eines Bettes, eines Hockers, eines Podests oder einer Sitzfläche.

## Claims

1. A construction kit for a for a collapsible frame structure (1),
**characterized in that**
the construction kit comprises flat components of a type A (15, 25, 35) and components of at least one type B (20, 30, 40, 45), which are each formed in the shape of rectangles, each of which has two long sides and two edge sides,
wherein the components of type A (15, 25, 35) and of type B (20, 30, 40, 45) each have a thickness (D) and each have an identical length (L) and an identical width (W),
the components of type A (15, 25, 35) and of type B (20, 30, 40, 45) are each subdivided into n equally large sections of length L/n, which are bounded by n+1 sectional boundaries,
wherein the edge sides of the components of types A and B (20, 30, 40, 45) form the respective outer sectional boundaries, and the central vertical line between the long sides of the respective components forms the central sectional boundary,
wherein the central vertical line is an axis of symmetry (S),
and **characterized in that**,
in the components of type A, on a long side of the respective component, n-2 slots are arranged along a partial length of the respective sectional boundaries and are located between the edge sides and the axis of symmetry (S),
and wherein, in the components of type B (20, 30, 40, 45), n-4 slots are arranged along selected sectional boundaries, which are located between the edge sides and the axis of symmetry (S),
wherein, starting from a long side, a portion of the n-4 slots are arranged along a partial length of the respective sectional boundaries, and, starting from the other long side, the other portion of the n-4 slots are arranged on the respective other sectional boundaries,
and wherein, starting from a long side, at least 2 of the n-4 slots of the components of type B (20, 30, 40, 45) are each arranged along the sectional boundaries, which are directly adjacent to the axis of symmetry,
and, furthermore, starting from the other long side of the component, at least 2 of the n-4 slots of the component of type B (20, 30, 40, 45) are arranged along the sectional boundaries, which are adjacent to the respective edge sides,
and n is 8, 10, or 12.

2. The construction kit according to claim 1,
further **characterized in that** n is 8,
the components of types A (15) and B (20) are subdivided into 8 equally large sections, which are bounded by 9 sectional boundaries,
wherein, in the components of type A (15), 6 slots (3) are arranged, which are disposed along a partial length of the respective sectional boundaries, which are located between the edge sides and the axis of symmetry (S),
and wherein, in the components of type B (20), 4 slots (3) are arranged, which are disposed along a partial length of the respective sectional boundaries,
of which, starting from a long side, 2 slots are each arranged along the sectional boundaries, which are directly adjacent to the axis of symmetry,
and wherein, starting from the other long side of the component, 2 slots are arranged along the sectional boundaries, which are adjacent to the respective edge sides.

3. The construction kit according to claim 1,
further **characterized in that** n is 10,
the components of types A (25) and B (30) are subdivided into 10 equally large sections, which are bounded by 11 sectional boundaries, wherein, in the components of type A, 8 slots (3) are arranged, which are disposed along a partial length of the respective sectional boundaries, which are located between the edge sides and the axis of symmetry (S),
and wherein, in the components of type B (30), 6 slots (3) are arranged, which are disposed along a partial length of the respective sectional boundaries,
2 slots of which, starting from a long side, are each arranged along the sectional boundaries, which are directly adjacent to the axis of symmetry,
and wherein 2 slots (3), starting from the other long side of the component, are arranged along the sectional boundaries, which are adjacent to the respective edge sides,
and 2 other slots (3) are arranged on the respective sectional boundaries of this long side and are directly adjacent to these slots adjacent to the respective edge side.

4. The construction kit according to claim 1,
further **characterized in that** n is 12,
the components of types A (35) and B (40, 45) are subdivided into 12 equally large sections, which are bordered by 13 sectional boundaries, wherein, in the components of type A, 10 slots (3) are arranged, which are disposed along a partial length of the respective sectional boundaries, which are located between the edge sides and the axis of symmetry (S),
and wherein the construction kit further comprises components of two different B types, namely B1 (40) and B2 (45), each of which has 8 slots (3), which are arranged along a partial length of the respective sectional boundaries,
wherein, in the component of type B1 (40), starting from a long side, 2 slots (3) are each arranged along a partial length of the respective sectional boundaries, which are directly adjacent the axis of symmetry, and, starting from the other long side of the component, 6 slots (3) are arranged along a partial length of the respective three adjacent sectional boundaries, which are located between the respective edge regions and the axis of symmetry (S),
and wherein, in the component of type B2 (45), starting from a long side, 6 slots (3) are each arranged along a partial length of the respective sectional boundaries, which are located between the axis of symmetry (S) and the respective edge sides,
and, starting from the other long side of the component, 2 slots (3) are arranged along a partial length of the respective sectional boundaries, which are directly adjacent to the respective edge sides.

5. The construction kit according to one of the preceding claims,
**characterized in that** the slots (3) of the components of type A (15, 25, 35) each have an identical length (L_{A}) and the slots (3) of the components of type B (20, 30, 40, 45) each have an identical length (L_{B}), and the sum of the lengths (L_{A}) and (L_{B}) is greater than or equal to the width (W) of the components.

6. The construction kit according to one of the preceding claims,
**characterized in that** the slots (3) of the components have a width (W_{S}), wherein the width (W_{S}) is greater than or equal to the thickness (D) of the components, wherein, when components of different thickness (D) are used, the width (W_{S}) is greater than or equal to the thickness of the components with the greatest thickness (D).

7. The construction kit according to one of the preceding claims,
**characterized in that** the components of type A (15, 25, 35) and the components of type B (20, 30, 40, 45) have at least one fold, which is arranged along a sectional boundary.

8. The construction kit according to one of the preceding claims,
**characterized in that** the components are produced from cardboard, corrugated cardboard, paperboard, wood, plastic, metal, textile fabric or from composite materials of the materials mentioned.

9. The construction kit according to one of the preceding claims,
**characterized in that** the components have a protective layer, selected from water-repellant and/or flame-retardant materials and/or a decorative layer, selected from paints, films, lacquers, textiles, and/or flocking.

10. The construction kit according to one of the preceding claims,
**characterized in that** openings are provided in the components, into which rods, tubes, wires, bands, or cords can be inserted.

11. A method for producing an installation assembly (2) by using a construction kit according to one of claims 1 to 10, **characterized in that** a frame structure is built by
joining a plurality of components of type A (15, 25, 35) to one another by inserting the respective slots into one another and, when a construction kit for which n is 8 or 10 is used, the two open edge regions are each terminated by means of a component of type B (20, 30) or,
when a construction kit for which n is 12 is used, the two open edge regions are each terminated with a component of type B1 (40) and of type B2 (45).

12. An installation assembly (2), produced using a construction kit according to one of claims 1 to 10 in the form of a bed, a stool, a platform, or a seat.

## Revendications

1. Kit de construction, pour une structure à casiers (1) repliable,
**caractérisé en ce que**
le kit de construction comprend des pièces de construction plates d'un type A (15, 25, 35) et des pièces de construction d'au moins un type B (20, 30, 40, 45), qui sont réalisées respectivement sous la forme de rectangles possédant respectivement deux côtés longitudinaux et
deux côtés marginaux,
dans lequel les pièces de construction du type A (15, 25, 35) et du type B (20, 30, 40, 45) possèdent respectivement une épaisseur (D) et respectivement une longueur (L) identique et une largeur (W) identique, les pièces de construction du type A (15, 25, 35) et du type B (20, 30, 40, 45) sont divisées respectivement en n sections égales de longueur L/n qui sont délimitées par n+1 limites de section,
dans lequel les côtés marginaux des pièces de construction des type A et B (20, 30, 40, 45) constituent les limites de section extérieures respectives et la médiatrice forme la limite de section médiane entre les côtés longitudinaux des pièces de construction respectives,
dans lequel la médiatrice est un axe de symétrie (S),
et **caractérisé en ce que**
dans les pièces de construction du type A, n-2 fentes sont agencées au niveau d'un côté longitudinal de la pièce de construction respective le long d'une longueur partielle des limites de section respectives qui se trouvent entre les côtés marginaux et l'axe de symétrie (S),
et dans lequel, dans les pièces de construction du type B (20, 30, 40, 45), n-4 fentes sont agencées le long de limites de section sélectionnées qui se trouvent entre les côtés marginaux et l'axe de symétrie (S),
dans lequel une partie des n-4 fentes est agencée à partir d'un côté longitudinal le long d'une longueur partielle des limites de section respectives,
et l'autre partie des n-4 fentes est agencée à partir de l'autre côté longitudinal au niveau des autres limites de section respectives,
et dans lequel au moins 2 parmi les n-4 fentes des pièces de construction du type B (20, 30, 40, 45) sont agencées à partir d'un côté longitudinal respectivement le long des limites de section qui sont immédiatement adjacentes à l'axe de symétrie,
et en outre au moins 2 parmi les n-4 fentes de la pièce de construction du type B (20, 30, 40, 45) sont agencées à partir de l'autre côté longitudinal de la pièce de construction le long des limites de section qui sont adjacentes aux côtés marginaux respectifs,
et n représente 8, 10 ou 12.

2. Kit de construction, selon la revendication 1,
**caractérisé en ce que** n représente 8,
les pièces de construction des types A (15) et B (20) sont divisées en 8 sections égales qui sont délimitées par 9 limites de section,
dans lequel, dans les pièces de construction du type A (15), sont agencées 6 fentes (3) qui sont agencées le long d'une longueur partielle des limites de section respectives qui se trouvent entre les côtés marginaux et l'axe de symétrie (S),
et dans lequel, dans les pièces de construction du type B (20), sont agencées 4 fentes (3) qui sont agencées le long d'une longueur partielle des limites de section respectives,
parmi lesquelles 2 fentes sont agencées à partir d'un côté longitudinal respectivement le long des limites de section qui sont immédiatement adjacentes à l'axe de symétrie,
et dans lequel 2 fentes sont agencées à partir de l'autre côté longitudinal de la pièce de construction le long des limites de section qui sont adjacentes aux côtés marginaux respectifs.

3. Kit de construction, selon la revendication 1,
**caractérisé en ce que** n représente 10,
les pièces de construction des types A (25) et B (30) sont divisées en 10 sections égales qui sont délimitées par 11 limites de section,
dans lequel, dans les pièces de construction du type A, sont agencées 8 fentes (3) qui sont agencées le long d'une longueur partielle des limites de section respectives qui se trouvent entre les côtés marginaux et l'axe de symétrie (S),
et dans lequel, dans les pièces de construction du type B (30), sont agencées 6 fentes (3) qui sont agencées le long d'une longueur partielle des limites de section respectives,
parmi lesquelles 2 fentes sont agencées à partir d'un côté longitudinal respectivement le long des limites de section qui sont immédiatement adjacentes à l'axe de symétrie,
et dans lequel 2 fentes (3) sont agencées à partir de l'autre côté longitudinal de la pièce de construction le long des limites de section qui sont adjacentes aux côtés marginaux respectifs,
et 2 autres fentes (3) sont agencées au niveau des limites de section respectives dudit côté longitudinal, et lesdites limites sont immédiatement adjacentes aux côtés marginaux respectifs de fentes adjacentes.

4. Kit de construction, selon la revendication 1,
**caractérisé en ce que** n représente 12,
les pièces de construction des types A (35) et B (40, 45) sont divisées en 12 sections égales qui sont délimitées par 13 limites de section,
dans lequel, dans les pièces de construction du type A, sont agencées 10 fentes (3) qui sont agencées le long d'une longueur partielle des limites de section respectives qui se trouvent entre les côtés marginaux et l'axe de symétrie (S),
et dans lequel le kit de construction comprend en outre des pièces de construction de deux types B différents, à savoir B1 (40) et B2 (45), qui présentent respectivement 8 fentes (3) qui sont agencées le long d'une longueur partielle des limites de section respectives,
dans lequel, dans la pièce de construction du type B1 (40), sont agencées 2 fentes (3) à partir d'un côté longitudinal respectivement le long d'une longueur partielle des limites de section respectives qui sont immédiatement adjacentes à l'axe de symétrie,
et 6 fentes (3) sont agencées à partir de l'autre côté longitudinal de la pièce de construction le long d'une longueur partielle des respectivement trois limites de section adjacentes qui se trouvent entre les régions marginales respectives et l'axe de symétrie (S),
et dans lequel, dans la pièce de construction du type B2 (45), sont agencées 6 fentes (3) à partir d'un côté longitudinal respectivement le long d'une longueur partielle des limites de section respectives qui se trouvent entre l'axe de symétrie (S) et les côtés marginaux respectifs, et 2 fentes (3) sont agencées à partir de l'autre côté longitudinal de la pièce de construction le long d'une longueur partielle des limites de section respectives qui sont immédiatement adjacentes aux côtés marginaux respectifs.

5. Kit de construction, selon l'une quelconque des revendications précédentes, **caractérisé en ce que** les fentes (3) des pièces de construction du type A (15, 25, 35) possèdent respectivement une longueur (L_{A}) identique, et les fentes (3) des pièces de construction du type B (20, 30, 40, 45) possèdent respectivement une longueur (L_{B}) identique, et la somme des longueurs (L_{A}) et (L_{B}) est supérieure ou égale à la largeur (W) des pièces de construction.

6. Kit de construction, selon l'une quelconque des revendications précédentes, **caractérisé en ce que** les fentes (3) des pièces de construction possèdent une largeur (W_{S}), dans lequel la largeur (W_{S}) est supérieure ou égale à l'épaisseur (D) des pièces de construction, dans lequel, lors de l'utilisation de pièces de construction d'épaisseurs (D) différentes, la largeur (W_{S}) est supérieure ou égale à l'épaisseur des pièces de construction présentant la plus grande épaisseur (D).

7. Kit de construction, selon l'une quelconque des revendications précédentes, **caractérisé en ce que** les pièces de construction du type A (15, 25, 35) et les pièces de construction du type B (20, 30, 40, 45) présentent au moins un pliage qui est agencé le long d'une limite de section.

8. Kit de construction, selon l'une quelconque des revendications précédentes, **caractérisé en ce que** les pièces de construction sont fabriquées à partir de carton, carton ondulé, carte, bois, plastique, métal, tissu textile ou à partir de matériaux composites constitués des matériaux ci-dessus.

9. Kit de construction, selon l'une quelconque des revendications précédentes, **caractérisé en ce que** les pièces de construction présentent une couche protectrice, sélectionnée parmi des matériaux hydrofuges et/ou résistants au feu, et/ou présentent une couche décorative, sélectionnée parmi des couleurs, des pellicules, des peintures, des textiles et/ou des flocages.

10. Kit de construction, selon l'une quelconque des revendications précédentes, **caractérisé en ce que** dans les pièces de construction sont prévues des ouvertures au sein desquelles peuvent être introduits des barrettes, des tubes, des fils, des bandes ou des cordelettes.

11. Procédé de fabrication d'un équipement de mise en place (2) faisant appel à un kit de construction selon l'une quelconque des revendications 1 à 10, **caractérisé en ce qu'**une structure à casiers est réalisée en
reliant les unes aux autres une pluralité de pièces de construction du type A (15, 25, 35) grâce à l'intercalation des fentes respectives les unes avec les autres,
et, lors de l'utilisation d'un kit de construction pour lequel n représente 8 ou 10, les deux régions marginales ouvertes sont respectivement fermées au moyen d'une pièce de construction du type B (20, 30), ou
lors de l'utilisation d'un kit de construction pour lequel n représente 12, les deux régions marginales ouvertes sont fermées respectivement avec une pièce de construction du type B1 (40) et du type B2 (45).

12. Équipement de mise en place (2), fabriqué grâce à un kit de construction selon l'une quelconque des revendications 1 à 10, sous la forme d'un lit, d'un tabouret, d'une estrade ou d'une surface d'assise.
